Europäisches Patentamt

European Patent Office

Office européen des brevets

(11) Publication number: **0 084 388**
**B1**

(12) **EUROPEAN PATENT SPECIFICATION**

(45) Date of publication of patent specification: **23.11.88**

(51) Int. Cl.⁴: **G 02 B 6/44**

(21) Application number: **83200014.5**

(22) Date of filing: **06.01.83**

(54) Optical cable element.

(30) Priority: **14.01.82 NL 8200126**

(43) Date of publication of application:
**27.07.83 Bulletin 83/30**

(45) Publication of the grant of the patent:
**23.11.88 Bulletin 88/47**

(84) Designated Contracting States:
**AT CH DE FR GB IT LI NL SE**

(56) References cited:
**EP-A-0 026 952**
**EP-A-0 048 674**
**DE-A-2 355 854**
**DE-A-2 709 106**
**FR-A-2 424 612**
**US-A-4 141 622**

**Proc. I. E.E., vol. 123, No. 6, June 1976**

(73) Proprietor: **NKF KABEL B.V.**
**Noordkade 64 Postbus 85**
**NL-2740 AB Waddinxveen (NL)**

(72) Inventor: **Bresser, Onno Roland**
**c/o INT. OCTROOIBUREAU B.V. Prof. Holstlaan 6**
**NL-5656 AA Eindhoven (NL)**

(74) Representative: **Plaisier, Aart et al**
**Nederlandsch Octrooibureau Johan de Wittlaan**
**15 P.O. Box 29720**
**NL-2502 LS 's-Gravenhage (NL)**

## Description

The invention relates to an optical cable element having a central core and at least one optical fibre provided around and on the outside surface of the core, which fibre may comprise a separate secondary coating of a synthetic resin.

Such an optical cable element is known inter alia from the periodical Philips Telecommunications Review, Volume 37, No. 4, September, 1979, *pp.* 231—241 and *pp.* 251—256. The optical cable element known from these references comprises a central core manufactured from an aromatic polyamide synthetic resin of high density, for example, the polyamide synthetic resin known by the tradename of Kevlar. Six optical fibres are helically wound around the core. Each optical fibre has a separate secondary coating provided by an extrusion process, for example, a secondary coating manufactured from polyvinylidene-difluoride within which the fibre can move freely. A polythene foil is wound around the cable element and is covered with an extruded synthetic resin sheath of, for example, polyethene which may be reinforced with glass fibres. It is stated on page 255 of the above literature reference that the pulling forces exerted on the cable element, for example, upon installation thereof, act on the outside of the element and have to be taken up and compensated for by the core. The secondary coating may not be used to transmit the pulling forces to the central core so that the cable element must be provided with an external strain relieving element.

It is an object of the invention to provide a cable element of the above-mentioned type which can withstand pulling forces exerted on the outside of the element without thus requiring an external strain relieving member.

Another object of the invention relates to a cable element which notably can withstand bending forces.

According to still another object, a cable element is provided which can be produced at a high manufacturing speed.

A further object of the invention is to provide a cable element having an improved longitudinal watertightness.

These objects are achieved with a cable element of the type mentioned in the opening paragraph which is characterized in that the optical fibre, or, in the presence of a separate secondary coating, said coating, is connected to the surface of the core by means of a permanently elastic adhesive allowing due to its elasticity a relative movement of the fibre, or of the secondary coating, with respect to the core mainly in the radial or tangential direction whereby a pulling force applied to the outside of the cable element is transferred via the fibre, or secondary coating, to the core, said layer having a thickness which is smaller than the diameter of the optical fibre or, in the presence of a separate secondary coating, is smaller than the diameter of the coated fibre.

It should be observed that in the European patent application 0 026 952 an optical cable is described comprising a central core provided with a cylindrical body of plastic. In the surface of said plastic body longitudinally extending grooves are arranged in which optical fibres are located. The fibers are periodically fixed inside the groove by means of for example an adhesive. Such periodic fixation prevents the fibers from being moved in a longitudinal direction of the cable, in case the cable is given a vertical or sloping position. It may be clear that this specific object achieved by periodic fixation of fibers inside the groove of a special type of optical cable, is fully different from the objects underlying the present case, as given hereabove.

In the European patent application 0 048 674 also a special vertical cable is disclosed to be used in an oil well. Said cable is very flexible, moisture-tight and can withstand relatively high temperatures and pressures. The cable comprises a core of soft deformable material around which optical fibers are wrapped in a helical spiral. The fibers are covered by a blanket of the same soft deformable material which in its turn is covered by several overlapping layers of metallic tape. Contrary to the present case, no adhesive is applied to fix the fibers on the core. Also the object according to EU—PA 0 048 674 is fully different from the objects of the present case.

In one embodiment of the cable element according to the invention several optical fibers are used, for example, six fibres. Optical fibres each having a separate secondary coating are to be preferred. It is to be noted that the optical fibre always comprises a so-called primary coating of synthetic resin which is provided on the surface of the fibre and protects it from damage.

By means of the measure according to the invention, as a result of the greatly increased attachment between core and optical fibres, or in the case in which optical fibres are used having a separate secondary coating, with strongly increased attachment between core and secondary coatings, it is achieved that a pulling force acting on the outside of the element is transferred optimally *via* fibres or secondary coatings to the core without the fibres and/or secondary coatings being damaged.

A strong construction is obtained with a clear bond between the fibres or secondary coatings and the core. As a result of this bond the linear expansion of notably the secondary coating in the case of temperature variations will be influenced by the core. With a suitable choice of the core material, for example, a core of steel, the expansion of the secondary coating will be inhibited by the core and thus be in better agreement with the small thermal expansion of the optical fibre. This implies that the cable element according to the invention may be used over a wider temperature range, in particular when fibres are used having a separate secondary coating. In spite of the rigid construction, relative movement of fibres or secondary coatings with respect to the core is possible due to the elasticity of the adhesive and this occurs mainly in the radial or tangential direction, that is to say a direction at right angles to the longitudinal axis of the core. As a result of this the differences in length occurring upon bending the element can be compensated for.

The use of a permanently elastic adhesive according to the invention has the further advantage that upon coupling the cable element to another cable element or to a termination, the various optical fibres do not spread fan-wise so that possible damage is avoided. The fibers or secondary coatings can easily be detached from the layer or adhesive.

Permanently elastic adhesives are well known and are commercially available.

A very suitable adhesive for use in the element according to the invention is a hot melt adhesive, that is to say an adhesive which is provided in the molten state while warm, and solidifies and adheres upon cooling. Examples of useful hot melt adhesives are the known adhesives on the basis of the copolymer poly(ethene-vinyl acetate).

A preferably used hot melt adhesive is a pressure sensitive adhesive on the basis of the above-mentioned copolymer.

The core used in the element may be manufactured from metal. It is also possible to use a core of a synthetic resin, for example, a polyamide core or a core of a reinforced synthetic resin, for example, an epoxy or polyester core reinforced with glass fibres or polyamide fibres.

In a favourable embodiment of the cable element according to the invention the adhesive is distributed over the whole surface of the core or over circumferential parts of the surface of the core which are situated at mutually equal distances viewed in the longitudinal direction of the core. In such embodiment the adhesive obstructs the creepage paths of moisture in the longitudinal direction of the element so that an improved longitudinal water-tightness is obtained. The cable element according to this embodiment can also be manufactured more easily in the case in which the optical fibres or the secondary coatings comprise a layer of adhesive. In particular to the thickness of the layer of adhesive provided on the core is smaller than the diameter of the optical fibre or, in the presence of a secondary coating, is smaller than the diameter of the coated fibre. The layer of adhesive does not extent to beyond the outside (circumferential edge) of fibres or secondary coatings. Herewith a sticking effect of the cable element is avoided which occurs in the case of larger thicknesses of the layer of adhesive and which constitutes a serious technical problem in the further processing of the cable element, for example, the twisting of more elements to form one optical cable, and the storage of cable elements on reels.

In still another favourable embodiment, the optical fibre or the secondary coating is embedded in SZ configuration in the layer of adhesive present on the core.

An SZ configuration is a known favourable form for an optical fibre which presents optical and technological advantages as compared with a spiral form. An SZ form can perhaps best be described as a sine wave bent around the core. An SZ configuration is obtained by rotating a feeding device of optical fibres with which the optical fibres are continuously guided over the surface of the core and in the longitudinal direction thereof, periodically and alternately to the left and to the right over an angle of rotation of, for example, 360°. Instead of rotating the feeding device it is also possible to rotate the core periodically to the left and to the right. In the element according to the invention the optical fibre or secondary coating is provided in SZ form on the surface of the core by means of the permanently elastic adhesive. Due to the layer of adhesive a direct fixation in SZ form is possible. Up till now an SZ form has been realized by providing grooves having an SZ configuration in the surface of the core and then laying optical fibres not having secondary coatings in the grooves.

Preferably a folded foil is provided around the core and the attached optical fibre and is covered with a sheath of a synthetic resin.

As a result of the good fixation of the fibre or secondary coating on the core by means of the permanantly elastic adhesive, a wound foil need not be used in the element according to the invention as is described in the above-mentioned literature reference. The use of a folded foil has the practical advantage of a considerably increased speed of manufacture. In this connection it is to be noted that winding a foil is a laborious and speed-restricting process step. Folding a foil, that is to say a longitudinal bending of a foil, does not have this disadvantage. The foil is preferably a foil of a synthetic resin, for example, a polyester foil or polyethene foil which, if desired, may be metallised. The foil serves as a heat shield to protect the optical fibres upon providing the sheath.

The element according to the invention can be manufactured in a simple manner in a continuous process step by providing the core over the whole length, or periodically over a part of the length, with a layer of adhesive, providing the optical fibres which may each have a separate secondary coating in the desired configuration on the surface of the core, then, if desired, folding a foil around the core with attached fibres or secondary coatings and extruding a synthetic resin sheath over the foil.

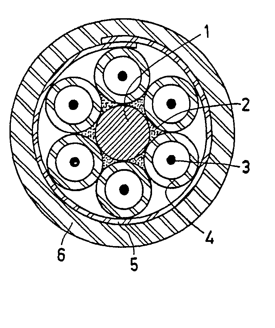

The invention will now be described in greater detail with reference to the drawing, the sole Figure of which is a cross-sectional view of an optical cable element according to the invention.

In the Figure, reference numeral 1 denotes a core which is formed by a steel litz wire. Over the whole circumference of the core 1 a layer 2 of a holt melt adhesive is provided. Six optical fibres 3 in SZ form are present around the core 1 with layer of adhesive 2. The fibres have a thickness of 100 µm and comprise a primary coating of approximately 4 µm, not shown. Each fibre is surrounded by a separate secondary coating 4 of synthetic resin which is permenantly elastically connected to the core 1 by means of a layer of adhesive 2. The secondary coating of synthetic resin has a thickness of approximately 0.6 mm. and is manufactured from polyvinylidene difluoride. A foil 5 of synthetic resin folded with overlap is provided around fibres 3 with secondary coatings 4 and in turn is surrounded by an extruded sheath 6 of synthetic resin which is manufactured from polyethylene.

## Claims

1. An optical cable element having a central core and at least one optical fibre provided around and on the outside surface of the core, which fibre may comprises a separate secondary coating of synthetic resin, characterized in that the optical fibre or, in the presence of a separate secondary coating, said secondary coating, is connected to the surface of the core by means of a layer of permanently elastic adhesive allowing due to its elasticity a relative movement of the fibre, or of the secondary coating, with respect to the core mainly in the radial or tangential direction whereby a pulling force applied to the outside of the cable element is transferred via the fibre, or secondary coating, to the core, said layer having a thickness which is smaller than the diameter of the optical fibre or, in the presence of a separate secondary coating, is smaller than the diameter of the coated fibre.

2. An optical cable element as claimed in Claim 1, characterized in that a holt melt adhesive is used.

3. An optical cable element as claimed in Claim 1 or 2, characterized in that the adhesive is distributed over the whole surface of the core or over circumferential parts of the surface of the core which are present at mutually equal distances viewed in the longitudinal direction of the core.

4. An optical cable element as claimed in Claim 3, characterized in the optical fibre or the secondary coating are embedded in the layer of adhesive in SZ configuration.

5. An optical cable element as claimed in Claim 1 characterized in that a folded foil is provided around the core and the optical fibre or secondary coating connected to the core, and is coated with a sheath of synthetic resin.

## Patentansprüche

1. Optisches Kabelelement mit einem zentralen Kern und mindestens einer optischen Faser, die auf der Außenseite des Kerns um diesen angeordnet ist und einen eigenen sekundären Überzug aus synthetisches Harz enthalten kann, dadurch gekennzeichnet, daß die optische Faser oder der sekundäre Überzug, falls ein solcher vorhanden ist, mit der Oberfläche des Kerns durch eine Schicht eines dauerelastischen Klebers verbunden ist, der wegen seiner Elastizität eine Relativbewegung der Faser oder des sekundären Überzuges bezüglich des Kerns hauptsächlich in radialer oder tangentialer Richtung zuläßt, so daß eine auf die Außenseite des Kabelelements einwirkende Zugkraft über die Faser oder den sekundären Überzug auf den Kern übertragen wird, und daß die Schicht eine Dicke hat, die kleiner ist als der Durchmesser der optischen Faser oder im Falle daß ein eigener sekundärer Überzug vorhanden ist, kleiner als der Durchmesser der überzogenen Faser.

2. Optisches Kabelelement nach Anspruch 1, dadurch gekennzeichnet, daß ein heißschmelzender Kleber verwendet ist.

3. Optisches Kabelelement nach Anspruch 1 oder 2, dadurch gekennzeichnet, daß der Kleber über die ganze Oberfläche des Kerns oder über Umfangsteile der Oberfläche des Kerns, die mit gleichen gegenseitigen Abständen in der Längsrichtung des Kerns vorgesehen sind, verteilt ist.

4. Optisches Kabelelement nach Anspruch 3, dadurch gekennzeichnet, daß die optische Faser oder der sekundäre Überzug in SZ-Konfiguration in die Kleberschicht eingebettet sind.

5. Optisches Kabelelement nach Anspruch 1, dadurch gekennzeichnet, daß eine Folie um den Kern und die mit dem Kern verbundene optische Faser oder den mit dem Kern verbundenen sekundären Überzug gewickelt und mit einem Mantel aus synthetisches Harz überzogen ist.

## Revendications

1. Elément de câble optique comportant un noyau central et au moins une fibre optique autour et sur la surface externe de ce noyau, ladite fibre pouvant avoir un revêtement secondaire distinct en résine synthétique, caractérisé en ce que ladite fibre ou ledit revêtement secondaire (dans le cas où il y en a un) est lié(e) au noyau par une couche d'adhésif à élasticité permanente autorisant, grâce à son élasticité, un mouvement relatif de la fibre ou du revêtement secondaire par rapport au noyau essentiellement dans la direction radiale ou tangentielle, une force de traction appliquée à l'extérieur de l'élément de câble se trouvant ainsi transférée, via la fibre ou le revêtement secondaire, jusqu'au noyau; ladite couche élastique ayant une épaisseur plus faible que le diamètre de la fibre optique ou, dans le cas de la présence d'un revêtement secondaire distinct, une épaisseur plus faible que le diamètre de la fibre enduite.

2. Elément de câble optique selon la revendication 1, caractérisé en ce qu'on utilise un adhésif fusible à chaud.

3. Elément de câble optique selon l'une quelconque des revendications 1 ou 2, caractérisé en ce que l'adhésif est réparti sur toute la surface du noyau ou sur des parties circonférencielles de la surface du noyau qui sont situées à des distances réciproquement égales eu égard à la direction longitudinale du noyau.

4. Elément de câble optique selon la revendication 3, caractérisé en ce que la fibre optique ou le revêtement secondaire est noyé(e) dans la couche de l'adhésif selon une configuration SZ.

5. Elément de câble optique selon la revendication 1, caractérisé en ce que: une feuille pliée est enroulée autour du noyau, la fibre optique ou la revêtement secondaire est lié(e) au noyau et recouvert(e) d'une gaine protectrice en résine synthétique.